# DEMANDE DE BREVET EUROPEEN

(11) **EP 3 912 922 A1**
(43) Date de publication de la demande: **24.11.2021**
(21) Numéro de dépôt: 21163724.4
(22) Date de dépôt: 19.03.2021
(51) Int. Cl.: B65D 5/20, B65D 5/42, B65D 5/66

(54) **EMBALLAGE ET PROCÉDÉ DE CONDITIONNEMENT PERMETTANT LA VISUALISATION DE DENRÉES**

(30) Priorité: 20.05.2020 FR 2005381
(71) Demandeur: Sorting, 82290 Lacourt-Saint-Pierre (FR)
(72) Inventeur: DELCASSE, Jean-Luc, 82290 LACOURT-SAINT-PIERRE (FR)
(74) Mandataire: Plasseraud IP

(57) **Abrégé**

Procédé de conditionnement de denrées périssables dans un emballage, comportant:
- une fourniture d'une barquette (1) en carton ou en matériau biodégradable adaptée pour contenir des denrées périssables et comportant une paroi de fond (10) et au moins une paroi périphérique (11, 12, 13, 14, 15),
- un remplissage (E2) de la barquette (1) avec les denrées périssables,
- une fermeture de la barquette de manière à former un emballage comprenant une ouverture recouverte par une étiquette, l'étiquette (2) étant configurée pour permettre une visualisation des denrées contenues dans la barquette à travers l'ouverture, la fermeture de la barquette comprenant :
* un collage (E4) de l'étiquette (2) sur des bords de l'ouverture de sorte que l'étiquette recouvre au moins en partie l'ouverture, l'étiquette (2) étant formée en matériau biodégradable.

## Description

### Domaine technique

La présente divulgation relève du domaine des emballages destinés à contenir des fruits et légumes et autres denrées périssables. Ces emballages présentent la particularité d'être configurés pour permettre la visualisation des denrées périssables tout en les empêchant de sortir de l'emballage.

### Technique antérieure

Il est connu d'emballer des denrées périssables dans des barquettes en plastique, les barquettes étant prévues pour être fermées par un couvercle en plastique ou être entourées par des films plastiques ou des filets en matière synthétiques. Ces emballages présentent l'avantage d'être peu coûteux mais sont peu écologiques.

Afin de réduire l'impact environnemental, il a été proposé de remplacer les barquettes en plastique par des barquettes en carton ou en matériau biodégradable. Cette solution n'est pas satisfaisante puisqu'elle fait souvent appel à l'utilisation de films plastiques pour empêcher les denrées périssables de sortir de leur emballage tout en étant visibles pour le consommateur. Afin de limiter l'utilisation de film plastique, il a été proposé d'insérer les barquettes dans des manchons en carton comportant une fenêtre de visualisation recouverte d'un film plastique. Bien que la quantité de film plastique soit réduite, on augmente la quantité de carton utilisée pour l'emballage.

Il existe également d'autres emballages entièrement en carton ou en matériau biodégradable comme par exemple des barquettes en carton comportant deux volets latéraux rabattables entourés d'un bandeau de papier. Le bandeau de papier permet, avec les volets latéraux, d'empêcher les fruits et légumes de sortir de la barquette tout en les gardant visibles. Par ailleurs, le bandeau peut être imprimé avec des codes-barres, des codes de traçabilité du produit et une date d'emballage par exemple, réduisant ainsi le nombre d'étapes permettant de procéder à l'emballage.

Cette solution présente l'inconvénient de nécessiter l'utilisation d'une machine spécifique pour placer le bandeau autour de la barquette, ce qui est relativement couteux. De plus, cette solution ne permet pas aux producteurs d'emballer manuellement leurs fruits et légumes.

### Résumé

La présente invention vise à remédier au moins à certains des inconvénients précités.

Un but de la présente invention est notamment de proposer un emballage destiné à contenir des fruits et légumes ou autres denrées périssables dont l'impact environnemental est réduit, l'emballage proposé permettant de visualiser son contenu afin de vérifier son état tout en l'empêchant de sortir de l'emballage.

Un autre but de l'invention est de proposer un procédé d'emballage facile à mettre en œuvre et peu coûteux, facilement adaptable à une chaine d'emballage existante.

Un autre but de l'invention est de proposer un procédé d'emballage pouvant être mis en œuvre au moins partiellement manuellement par les producteurs.

Il est proposé un emballage adapté pour contenir des denrées périssables tout en permettant leur visualisation comportant :
- une barquette en carton ou en matériau biodégradable adaptée pour contenir des denrées périssables, la barquette comportant une paroi de fond et une pluralité de parois périphériques, la barquette comprenant en outre deux volets rabattables reliés chacun à une paroi périphérique, les volets rabattables étant conformés pour former, lorsqu'ils sont rabattus, une ouverture sur une partie supérieure de la barquette, la barquette formant ainsi une cavité destinée à contenir les denrées périssables et destinée à être fermée tout en permettant la visualisation des denrées périssables à travers l'ouverture, et
- une étiquette collée sur des bords de l'ouverture formés par les deux volets et recouvrant au moins en partie l'ouverture de manière à maintenir les denrées dans la cavité tout en permettant leur visualisation, l'étiquette étant formée en matériau biodégradable.

La barquette peut comporter une paroi périphérique entourant l'intégralité de la paroi de fond, lorsque la paroi de fond est circulaire ou elliptique par exemple, ou une pluralité de parois périphériques, chaque paroi périphérique étant reliée à un côté de la paroi de fond par exemple lorsque la paroi de fond est de forme rectangulaire ou carrée.

On a ainsi formé un emballage écologique permettant la visualisation des denrées tout en les empêchant de sortir de la cavité formée par la barquette.

On notera que l'étiquette est collée sur les deux volets de manière à fermer la barquette. Ainsi, l'étiquette permet de fermer simultanément la barquette et l'ouverture. Les deux volets rabattables étant fixés sur l'étiquette, la barquette ne peut être ouverte. De plus, l'ouverture est recouverte au moins en partie par l'étiquette de manière à empêcher les denrées de sortir de l'emballage tout en permettant leur visualisation.

La barquette et l'étiquette peuvent se détériorer facilement en ayant peu d'impact environnemental. En outre, lorsque la barquette est en carton, elle peut être séparée de l'étiquette et recyclée. En particulier, il est aisé de séparer l'étiquette de la barquette puisque l'étiquette ne fait pas partie intégrante de la barquette. Il est ainsi possible de valoriser différemment la barquette de l'étiquette en les introduisant dans deux circuits différents de valorisation, par exemple en recyclant la barquette et en compostant l'étiquette.

On notera par ailleurs que de manière connue, tout matériau biodégradable peut être compostable. Dans le cadre de la présente demande, on considère qu'un matériau compostable peut être un matériau domestiquement ou industriellement compostable (connu également sous la dénomination « home compost » ou « compost OK », respectivement). Ainsi, les circuits de valorisation peuvent également comprendre le compostage domestique et le compostage industriel.

De plus, lorsque l'étiquette est imprimée, par exemple avec une encre biodégradable, on limite d'autant plus la quantité de matériaux utilisée pour l'emballage et son impact environnemental.

De manière avantageuse, l'étiquette peut être imprimée sur la zone recouvrant la barquette, i.e. substantiellement hors de la zone recouvrant l'ouverture. Il est ainsi facile d'adapter le visuel de la barquette, par une impression différente de l'étiquette, tout en gardant une barquette identique. On limite ainsi les coûts liés au stockage et à la réalisation de barquettes avec des visuels différents.

Par ailleurs, l'utilisation de deux volets rabattables permet de rigidifier l'emballage et de limiter le volume de la barquette lorsque celle-ci est stockée avant le conditionnement.

Dans un mode de réalisation, l'étiquette comporte une partie non-adhésive recouvrant au moins en partie l'ouverture de manière à maintenir les denrées dans la cavité tout en permettant leur visualisation. Ainsi, les denrées ne sont pas souillées par de l'adhésif et ne se collent pas à l'étiquette.

Dans une première variante de réalisation, l'étiquette est formée sur un film transparent. Elle est donc transparente. Il est alors possible de visualiser l'intégralité des denrées à travers l'ouverture qu'elle recouvre.

Dans une deuxième variante de réalisation, l'étiquette est formée sur du papier ou du carton et comporte des perforations sur une partie recouvrant au moins en partie l'ouverture. L'étiquette comprend alors une pluralité de perforations de dimensions inférieures à celles des denrées contenues afin d'empêcher les denrées de sortir de l'emballage. Les perforations peuvent être de formes diverses et variées et représenter le type de fruit contenu par exemple. Les perforations peuvent se trouver sur l'intégralité de l'étiquette ou uniquement sur la partie destinée à recouvrir l'ouverture.

Dans un mode particulier de réalisation, la barquette comprend deux paires de parois périphériques opposées l'une à l'autre, la barquette comprend, sur l'une des paires de parois périphériques, les deux volets rabattables reliés chacun à une paroi périphérique, les volets rabattables étant conformés pour former, lorsqu'ils sont rabattus, un espace libre entre les deux volets, les deux volets formant des bords de l'ouverture sur laquelle est collée l'étiquette transparente.

Ainsi, les volets forment les bords de l'ouverture sur laquelle est apposée l'étiquette.

Dans un mode de réalisation particulier, la barquette comprend, en outre, pour chaque volet rabattable :
- un système de verrouillage d'une extrémité de chaque volet rabattable sur une paroi périphérique correspondante lorsque les volets sont rabattus vers l'intérieur de la barquette, le système de verrouillage comprenant :
   * un organe de verrouillage mâle, et
   * un organe de verrouillage femelle,
chaque organe de verrouillage mâle étant configuré pour être inséré dans un organe de verrouillage femelle respectif de manière à verrouiller chaque volet dans une position de fermeture de la barquette lorsque les volets sont rabattus vers l'intérieur de la barquette, l'un de l'organe de verrouillage mâle et de l'organe de verrouillage femelle se trouvant sur une extrémité du volet rabattable et l'autre de l'organe de verrouillage mâle et de l'organe de verrouillage femelle se trouvant sur une paroi périphérique de la barquette, ladite paroi périphérique étant en regard de ladite extrémité lorsque ledit volet est rabattu vers l'intérieur de la barquette.

Ainsi, le système de verrouillage permet d'augmenter la rigidité et la stabilité de la surface formée par les volets rabattables fixés sur l'étiquette. L'application de l'étiquette peut donc être faite avec une pression suffisamment élevée pour assurer une bonne adhérence de l'étiquette tout en évitant un possible affaissement des volets vers l'intérieur de la barquette, ce qui pourrait endommager les denrées contenues. Il est aussi possible, lors du transport, de superposer plusieurs barquettes tout en limitant les risques de déchirure de l'étiquette ou l'écrasement des denrées contenues.

Selon un autre aspect, il est proposé une étiquette d'un emballage tel que décrit précédemment comportant une partie adhésive et une partie non adhésive, l'étiquette étant formée sur un matériau biodégradable, de préférence imprimable. L'étiquette peut être formée sur un film transparent biodégradable ou sur du papier ou tout autre matériau non-transparent. Dans ce cas, l'étiquette comprend une pluralité de perforations permettant de visualiser partiellement le contenu de la barquette au travers de l'ouverture.

Selon un autre aspect, il est proposé un procédé de conditionnement de denrées périssables dans un emballage comportant:
- une fourniture d'une barquette en carton ou en matériau biodégradable adaptée pour contenir des denrées périssables et comportant une paroi de fond et au moins une paroi périphérique,
- un remplissage de la barquette avec les denrées périssables,
- une fermeture de la barquette de manière à former un emballage comprenant une ouverture recouverte par une étiquette, l'étiquette étant configurée pour permettre une visualisation des denrées contenues dans la barquette à travers l'ouverture, la fermeture de la barquette comprenant :
   * un collage de l'étiquette sur des bords de l'ouverture de sorte que l'étiquette recouvre au moins en partie l'ouverture de manière à maintenir les denrées dans la cavité tout en permettant leur visualisation, l'étiquette étant formée en un matériau biodégradable, de préférence imprimable.

On notera que l'ouverture décrite ci-dessus est formée sur une partie supérieure de la barquette ou sur un couvercle configuré pour fermer partiellement la barquette. Il est ainsi possible de visualiser facilement le contenu de la barquette à travers l'ouverture.

Avantageusement, les étapes du procédé peuvent être mises en œuvre de manière automatique ou de manière manuelle permettant le conditionnement chez des producteurs bénéficiant de peu de moyens.

Dans un mode de réalisation, l'ouverture correspond à des bords de la barquette formés par une extrémité de l'au moins une paroi périphérique, et le collage de l'étiquette transparente sur les bords de l'ouverture permet la fermeture de la barquette.

On limite ainsi le nombre d'étapes de conditionnement des denrées périssables.

Dans un mode de réalisation, le procédé de conditionnement comprend en outre une étape de fourniture d'un couvercle en carton ou en matériau biodégradable comportant au moins une découpe formant l'ouverture de la barquette une fois le couvercle en position sur celle-ci, chaque découpe étant destinée à être recouverte par l'étiquette et la fermeture de la barquette comprend une étape de :
* dépôt du couvercle sur la barquette de manière à venir fermer partiellement la barquette, et
* collage de l'étiquette sur des bords de la découpe du couvercle, le collage de l'étiquette étant mis en œuvre après le dépôt du couvercle.

L'utilisation d'un couvercle permet de réduire la quantité de film transparent biodégradable utilisé pour recouvrir l'ouverture de l'emballage et augmente la rigidité de l'emballage.

Dans un mode de réalisation, la barquette fournie comporte deux paires de parois périphériques opposées l'une à l'autre et un volet rabattable relié à l'une des parois périphériques des deux paires, ledit volet comportant au moins une découpe formant l'ouverture de la barquette une fois le volet rabattu sur celle-ci, et la fermeture de la barquette comprend :
* un rabattage d'un volet rabattable comprenant une découpe vers l'intérieur de la barquette, et
* le collage de l'étiquette sur des bords de l'ouverture de l'emballage comprend l'application de l'étiquette sur des bords de la découpe de manière à recouvrir la découpe, et
* une fixation du volet sur la barquette, préférentiellement par le bais de l'étiquette.

L'utilisation d'un volet rabattable permet de réduire la quantité de film transparent biodégradable utilisé pour recouvrir l'ouverture de l'emballage et augmente la rigidité de l'emballage.

Dans un mode de réalisation particulier dans lequel la barquette fournie comprend deux volets rabattables tel que décrit précédemment, la fermeture de la barquette comprend :
* un rabattage des deux volets rabattables vers l'intérieur de la barquette et
* le collage de l'étiquette sur les deux volets rabattus de manière à recouvrir l'ouverture.

L'utilisation de deux volets rabattables permet de rigidifier l'emballage et de limiter le volume de la barquette lorsque celle-ci est stockée avant le conditionnement. En outre, la fixation des deux volets sur l'étiquette permet de maintenir les deux volets dans une position de fermeture de la barquette.

Dans un mode de réalisation particulier dans lequel la barquette fournie comprend deux volets rabattables conformés pour former, lorsqu'ils sont rabattus, un espace libre entre les deux volets tel que décrit précédemment, la fermeture de la barquette comprend :
* un rabattage de deux volets rabattables vers l'intérieur de la barquette de manière à créer un espace libre entre les deux volets, et
* le collage de l'étiquette transparente sur les deux volets rabattus de manière à recouvrir l'espace libre entre les deux volets.

L'utilisation de deux volets rabattables permet de rigidifier l'emballage et de limiter le volume de la barquette lorsque celle-ci est stockée avant le conditionnement. En outre, la fixation des deux volets sur l'étiquette permet de maintenir les deux volets dans une position de fermeture de la barquette.

Dans un mode particulier de réalisation dans lequel la barquette fournie comprend un système de verrouillage tel que décrit précédemment, la fermeture de la barquette comprend en outre :
* un rabattage des volets rabattables vers l'intérieur de la barquette,
* une insertion de chaque organe de verrouillage mâle dans l'organe de verrouillage femelle respectif de manière à verrouiller les deux volets rabattables dans une position de fermeture de la barquette, et
* le collage de l'étiquette sur les deux volets verrouillés de manière à recouvrir l'ouverture.

Dans un mode de réalisation, le procédé de conditionnement comprend le collage de l'étiquette sur les bords de l'ouverture à l'aide d'un moule configuré pour appuyer simultanément sur la partie adhésive de l'étiquette et sur les bords de l'ouverture. Avantageusement, le moule est conformé pour ne pas appuyer sur la partie non adhésive de l'étiquette et éviter son déchirement lors de l'application de celle-ci. On s'assure aussi qu'une pression uniforme est appliquée sur le moule et sur l'étiquette lors du collage, ce qui renforce l'adhésion de l'étiquette.

Dans un mode de réalisation, le procédé de conditionnement comprend l'impression de l'étiquette transparente avant ou après le collage de l'étiquette. On réduit ainsi le temps de conditionnement et le nombre d'étapes à réaliser lors du conditionnement. L'impression avant ou après le collage de l'étiquette permet d'adapter facilement le visuel de la barquette au fil de l'eau en fonction des denrées destinées à se trouver dans la barquette. On évite ainsi d'avoir à changer de barquette à chaque fois que l'on veut changer le visuel de la barquette.

Selon un autre aspect, il est proposé un dispositif applicateur d'étiquettes adhésives destinées à recouvrir une ouverture d'un emballage lors de la mise en œuvre d'un procédé de conditionnement tel que précédemment décrit, dans lequel
- ledit dispositif applicateur d'étiquettes comprend un moule pressoir configuré pour appuyer sur une partie adhésive d'une étiquette transparente de forme déterminée, et
- ledit dispositif est configuré pour appliquer une pression prédéfinie sur ledit moule de manière à faire adhérer la partie adhésive de forme déterminée de l'étiquette sur des bords de l'ouverture.

Ainsi, on exerce une pression sur la partie de l'étiquette en contact avec les bords de l'ouverture mais on n'exerce pas de pression sur la partie de l'étiquette recouvrant substantiellement l'ouverture. On évite ainsi de déchirer l'étiquette à l'endroit où elle recouvre l'ouverture.

Dans un mode de réalisation, l'étiquette comporte une partie non adhésive destinée à recouvrir au moins en partie l'ouverture.

Dans un mode de réalisation particulier, ledit dispositif applicateur d'étiquettes comprenant un moule pressoir configuré pour appuyer sur une partie adhésive d'une étiquette transparente de forme déterminée, et - ledit dispositif est configuré pour appliquer une pression prédéfinie sur ledit moule de manière à faire adhérer la partie adhésive de forme déterminée de l'étiquette transparente de sorte que la partie transparente non-adhésive de l'étiquette recouvre au moins en partie l'ouverture.

Selon encore un autre aspect, il est proposé une chaine de conditionnement adaptée pour mettre en œuvre le procédé de conditionnement décrit ci-dessus et comportant au moins :
- un convoyeur de barquettes,
- un dispositif de remplissage des barquettes avec les denrées, et
- un applicateur d'étiquettes adapté pour appliquer les parties adhésives de l'étiquette sur la barquette de manière à fermer l'ouverture de la barquette tout en permettant la visualisation des denrées contenues dans celle-ci.

### Brève description des dessins

D'autres caractéristiques, détails et avantages apparaîtront à la lecture de la description détaillée ci-après, et à l'analyse des dessins annexés, sur lesquels :
**Fig. 1**

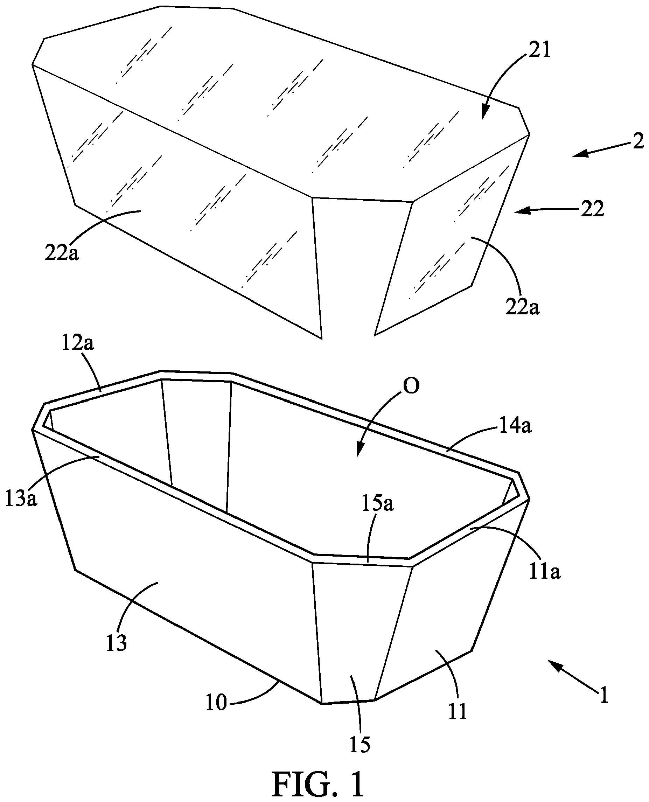

   La figure 1 montre une vue éclatée d'un emballage selon un premier mode de réalisation.
**Fig. 2**

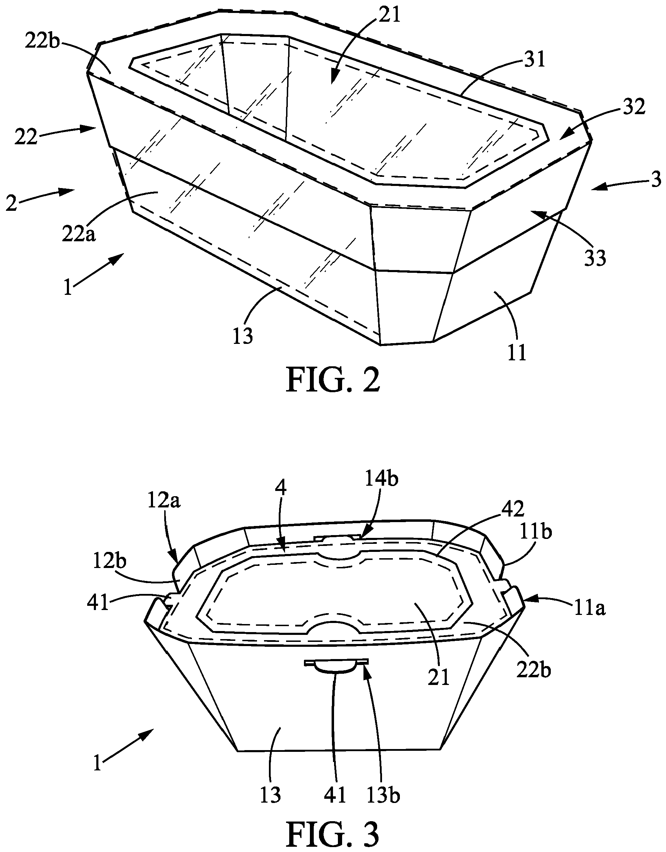

   La figure 2 montre une vue d'un emballage selon un second mode de réalisation.
**Fig. 3**
   La figure 3 montre une vue d'un emballage selon un troisième mode de réalisation.
**Fig. 4**

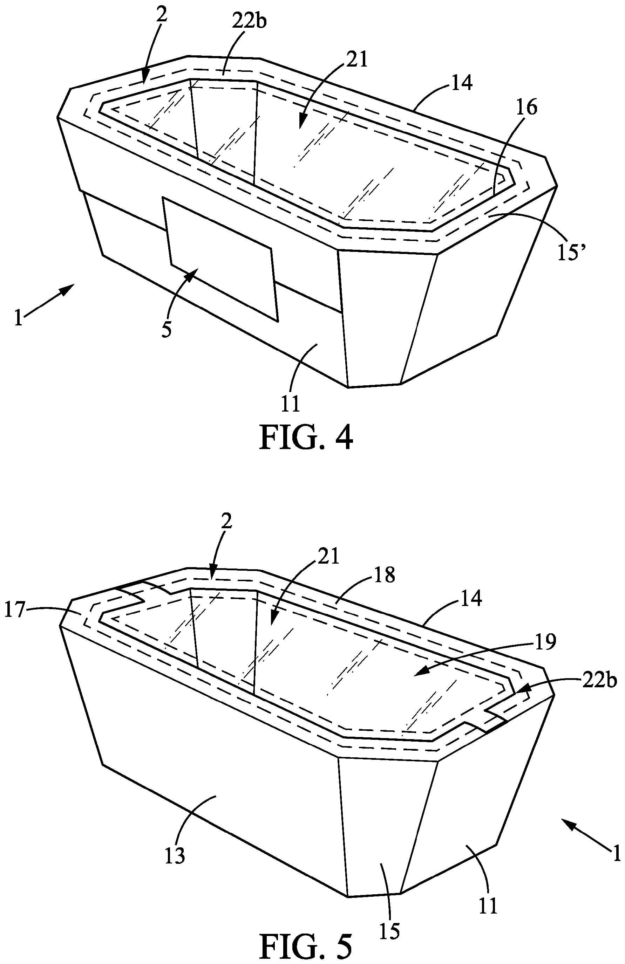

   La figure 4 montre une vue d'un emballage selon un quatrième mode de réalisation.
**Fig. 5**
   La figure 5 montre une vue d'un emballage selon un cinquième mode de réalisation.
**Fig. 6**

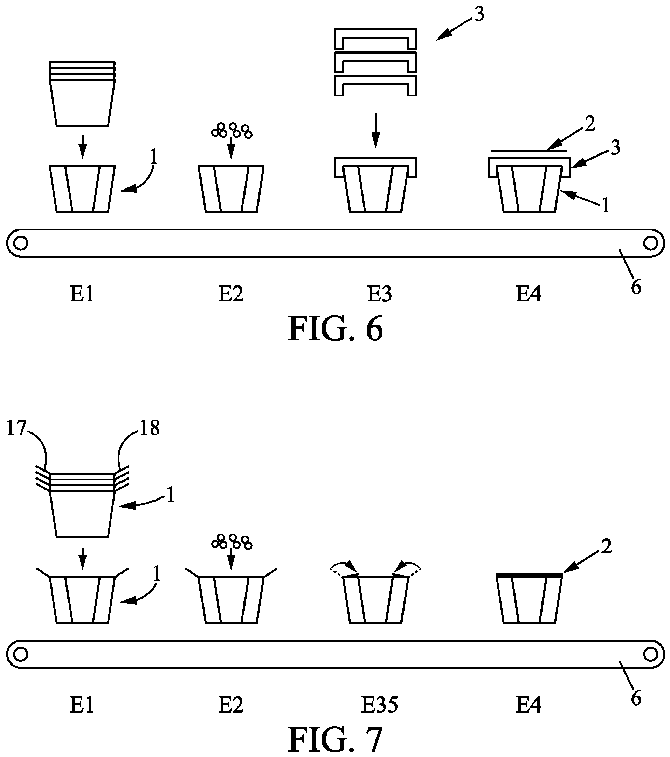

   La figure 6 représente de manière schématique un procédé de conditionnement selon un mode de réalisation.
**Fig. 7**
   La figure 7 représente de manière schématique un procédé de conditionnement selon un autre mode de réalisation.
**Fig. 8**

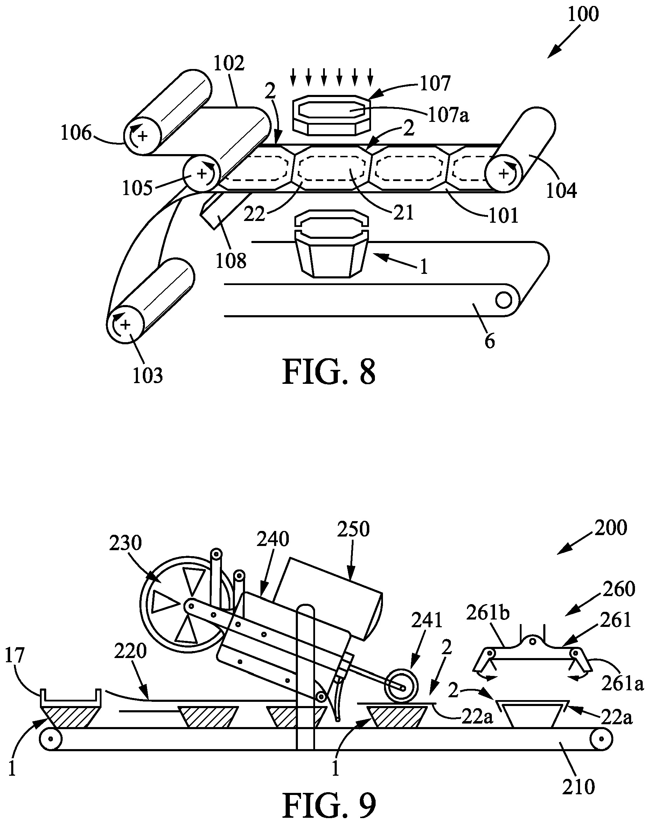

   La figure 8 illustre de manière plus détaillée une étape du procédé de conditionnement selon un mode de réalisation.
**Fig. 9**
   La figure 9 illustre partiellement une chaine de conditionnement selon un mode de réalisation.
**Fig. 10**

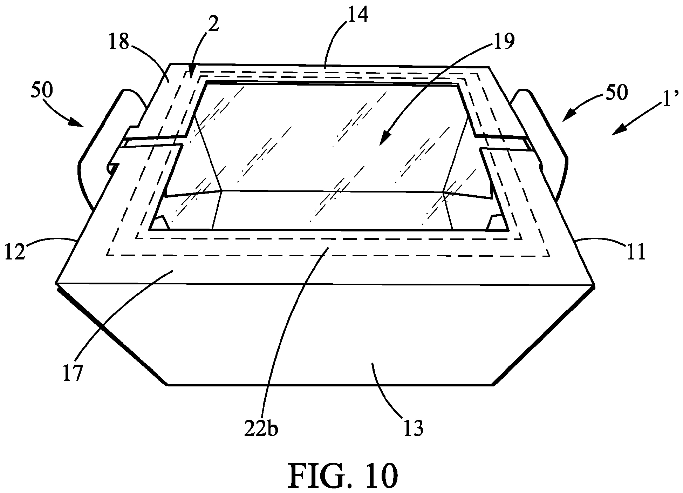

   La figure 10 montre un emballage selon un sixième mode de réalisation.
**Fig. 11**

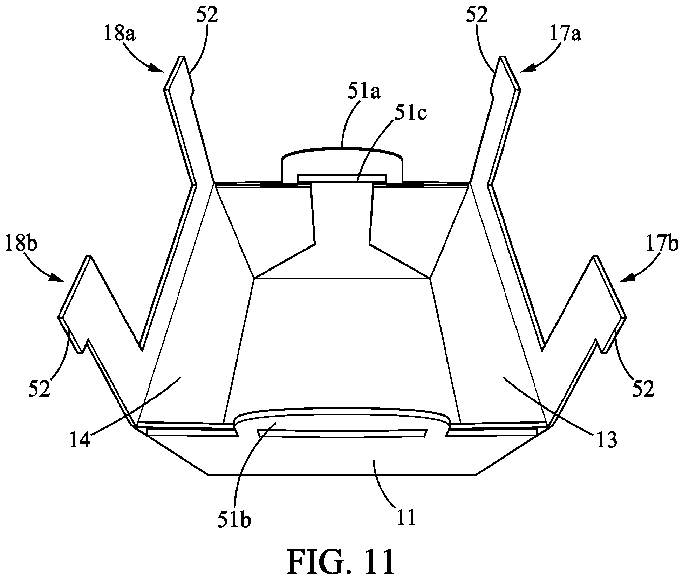

   La figure 11 montre une partie de l'emballage de la figure 10 dans une configuration ouverte.
**Fig. 12**

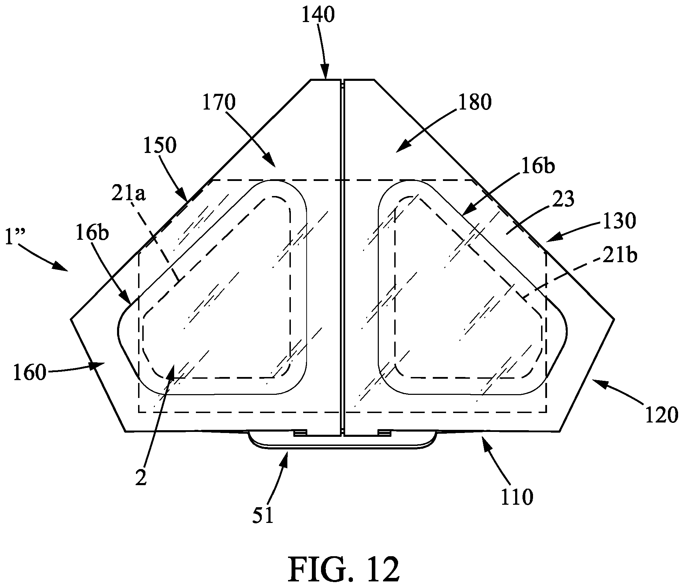

   La figure 12 montre une vue d'un emballage selon un septième mode de réalisation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente divulgation concerne un emballage adapté pour contenir des denrées périssables, telles que des fruits et légumes frais par exemple, tout en permettant leur visualisation. De manière avantageuse, l'emballage proposé limite l'impact environnemental de celui-ci lors de sa valorisation ou de sa dégradation. L'emballage comprend une barquette en carton ou en matériau biodégradable adaptée pour contenir les denrées périssables et donc rigide, la barquette formant ainsi une cavité destinée à contenir les denrées périssables. La barquette est destinée à être fermée tout en permettant la visualisation des denrées périssables à travers une ouverture.

On notera que le carton est un matériau à la fois recyclable et biodégradable. Ainsi, on peut choisir de recycler ou non la barquette en carton selon le type de traitement de valorisation des déchets utilisé tout en limitant l'impact écologique de l'utilisation d'une barquette en un tel matériau.

Ainsi, dans la présente demande, un « matériau biodégradable » est un matériau exclusivement biodégradable adapté pour former des barquettes rigides. On rappelle qu'un matériau biodégradable peut être compostable industriellement, i.e. « compost OK », ou domestiquement, i.e. « home compost ».

On notera que dans les exemples décrits ci-dessous, il est fait référence à une étiquette transparente, i.e. formée sur un film transparent, mais que cette étiquette transparente peut être remplacée par une étiquette ajourée, en carton, papier ou tout autre matériau non-transparent, comprenant une pluralité de perforations permettant de visualiser partiellement les denrées au travers de l'ouverture.

On notera que, de manière générale, une barquette peut comporter une paroi périphérique entourant l'intégralité de la paroi de fond, lorsque la paroi de fond est circulaire ou elliptique par exemple, ou une pluralité de parois périphériques, chaque paroi périphérique étant reliée à un côté de la paroi de fond par exemple lorsque la paroi de fond est de forme rectangulaire ou carrée.

Dans un premier mode de réalisation, illustré en référence à la figure 1, la barquette 1 peut comporter une paroi de fond 10 et au moins une paroi périphérique, et notamment une première paire de parois périphériques 11, 12 opposées l'une à l'autre et se faisant face et une deuxième paire de parois périphériques 13, 14 opposées l'une à l'autre et se faisant face comme illustré ici. La barquette 1 peut également comporter des parois périphériques supplémentaires, par exemple des parois périphériques 15 formant les coins de la barquette 1.

Une étiquette transparente 2 est collée sur des bords d'une ouverture O définie par des bords de la barquette. L'ouverture est donc formée sur une partie supérieure de la barquette. Les bords de la barquette sont formés ici par une extrémité 11a, 12a, 13a, 14a, 15a des parois périphériques 11, 12, 13, 14, 15.

L'étiquette transparente 2 peut comporter une partie centrale non-adhésive 21 recouvrant au moins en partie l'ouverture de manière à maintenir les denrées dans la cavité tout en permettant leur visualisation et une partie périphérique adhésive 22 collée sur des bords de l'ouverture. La partie périphérique adhésive 22 peut comprendre au moins deux rabats 22a adaptés pour être collés sur des parois périphériques de la barquette 1. Comme représenté sur la figure 1, la partie périphérique adhésive 22 comprend quatre rabats 22a destinés à être collés sur les parois périphériques 11, 12, 13, 14. L'étiquette 2 est formée en matériau biodégradable transparent tel qu'un film de cellulose par exemple.

L'étiquette 2 permet de fermer la cavité formée par la barquette contenant les denrées périssables tout en permettant leur visualisation. Comme explicité ultérieurement, l'étiquette 2 peut être imprimée avant d'être collée sur la barquette par exemple.

Dans ce mode de réalisation, la barquette et l'étiquette étant toutes deux biodégradables, leur détérioration a peu d'impact environnemental.

Les figures 2 à 5 illustrent d'autres modes de réalisation de l'invention se basant sur la barquette illustrée en référence à la figure 1. Ainsi, les mêmes références numériques sont utilisées pour désigner les mêmes éléments.

Dans ces modes de réalisation, l'ouverture de la barquette est formée sur une partie supérieure de la barquette ou sur un couvercle configuré pour fermer partiellement la barquette.

La figure 2 illustre un second mode de réalisation de l'invention. Dans ce mode de réalisation, l'emballage 1 comporte en outre un couvercle 3 en carton ou en matériau biodégradable comportant une face supérieure 32 pourvue d'au moins une découpe 31 formant l'ouverture de la barquette une fois le couvercle en position sur celle-ci comme représenté ici de manière à fermer partiellement la barquette. Dans le mode de réalisation représenté ici, le couvercle 3 comprend des rebords 33 entourant les parois périphériques de la barquette 1 lorsque le couvercle 3 est posé sur la barquette 1. La barquette 1 et le couvercle 3 sont formés de préférence en un même matériau, par exemple en carton.

Dans le mode de réalisation décrit ici, la partie adhésive 22 de l'étiquette comprend une partie centrale périphérique 22b entourant la partie centrale non-adhésive 21. La partie centrale périphérique 22b permet de coller l'étiquette transparente 2 sur les bords de l'ouverture formée par la découpe 31 sur la face supérieure 32 du couvercle 3.

De manière facultative, la partie adhésive 22 peut comprendre un ou plusieurs rabats 22a destinés à fixer les rebords 33 du couvercle sur la barquette 1 comme représenté ici. On renforce ainsi, si nécessaire, le maintien du couvercle 3 sur la barquette et on évite aussi une ouverture intempestive de la barquette par des consommateurs avant achat par exemple. L'étiquette 2 peut comprendre deux rabats adhésifs 22a collés sur des rebords 33 du couvercle et sur deux parois périphériques 13, 14 de la barquette par exemple.

La figure 3 illustre un troisième mode de réalisation de l'invention. Dans ce mode de réalisation, l'emballage 1 comprend un autre type de couvercle 4 destiné à être fixé sur la barquette par d'autres moyens de fixation tels que des protrusions 41 destinées à être reçues dans des logements 11b, 12b formés sur les extrémités 11a et 12a des parois périphériques 11, 12 et dans des encoches 13b, 14b formées à proximité des extrémités 13a, 14a des parois périphériques 13, 14 de la barquette 1. Ici encore l'ouverture est formée sur le couvercle configuré pour fermer partiellement la barquette.

Le couvercle 4 présente au moins une découpe 42 formant l'ouverture de la barquette une fois le couvercle en position sur celle-ci. L'étiquette transparente 2 est collée de sorte que la partie non-adhésive 21 recouvre substantiellement la découpe 42 et la partie centrale périphérique 22b est collée sur le reste du couvercle 4 et sur les bords de la découpe 42. Dans ce mode de réalisation, la barquette 1 et le couvercle 4 sont formés de préférence en carton.

Dans ce mode de réalisation, la barquette peut être recyclée et le couvercle avec l'étiquette stocké en attendant sa dégradation naturelle. L'étiquette peut également être décollée du couvercle et être valorisée séparément.

La figure 4 illustre un quatrième mode de réalisation de l'invention. Dans ce mode de réalisation, la barquette 1 comprend en outre un volet rabattable 15' relié à une paroi périphérique, ici la paroi périphérique 14. Le volet rabattable 15' comporte au moins une découpe 16 formant l'ouverture de la barquette une fois le volet rabattu sur celle-ci comme représenté sur la figure 4. L'ouverture est donc formée sur une partie supérieure de la barquette, ce qui facilite la visualisation des denrées.

L'étiquette 2 est collée sur le volet 15' de sorte que la partie non-adhésive 21 recouvre substantiellement la découpe 16. Dans le mode de réalisation décrit ici, le volet rabattable 15' est plié sur son extrémité et fixé à la barquette 1 par le biais d'une étiquette supplémentaire 5. Il peut s'agir d'une étiquette de marquage biodégradable et non transparente par exemple sur laquelle sont imprimés des codes-barres, des codes de traçabilité du produit et/ou une date d'emballage par exemple.

La figure 5 illustre un cinquième mode de réalisation. Dans ce mode de réalisation, la barquette 1 comprend en outre, en plus de la paroi de fond 10 et des parois périphériques 11, 12, 13, 14, 15, sur l'une des paires de parois périphériques, ici les parois 13 et 14, deux volets rabattables 17, 18 reliés chacun à la paroi 13 et la paroi 14, respectivement. Les volets rabattables 17, 18 sont conformés pour former, lorsqu'ils sont rabattus, un espace libre 19 entre les deux volets 17, 18. Les volets rabattables 17, 18 sont donc conformés pour former, lorsqu'ils sont rabattus, une ouverture sur une partie supérieure de la barquette. Dans le mode de réalisation décrit ici, les deux volets 17, 18 représentés forment deux bords de l'ouverture sur laquelle est collée l'étiquette transparente 2 par sa partie centrale périphérique 22b. On notera que les deux volets sont fixés sur l'étiquette et que l'étiquette ferme ainsi la barquette. Les deux volets sont alors maintenus dans une position de fermeture de la barquette par l'étiquette.

L'étiquette transparente 2 utilisée est semblable à celle décrite en référence aux figures 3 et 4 et comporte une partie centrale non-adhésive 21 et une partie périphérique 22b adhésive.

On notera que la géométrie des volets n'est pas limitative et que les deux volets rabattables peuvent également comprendre au moins une découpe. L'étiquette 2 peut alors être collée sur les volets de sorte que la partie non-adhésive 21 de l'étiquette recouvre chaque découpe par exemple.

Les figures 10 à 12 illustrent d'autres modes de réalisation comprenant deux volets rabattables conformés pour former, lorsqu'ils sont rabattus, au moins une ouverture sur une partie supérieure de la barquette.

Les figures 10 et 11 illustrent une variante de la réalisation de l'emballage de la figure 5. Les éléments semblables sont désignés par les mêmes références numériques.

Comme plus particulièrement visible sur la figure 10, la barquette 1' comprend un système de verrouillage 50 des deux volets rabattables 17, 18 dans une position de fermeture de la barquette lorsque les volets sont rabattus vers l'intérieur de la barquette. En particulier, chaque volet 17, 18 est destiné à être verrouillé sur les parois périphériques 11, 12 de la barquette puis à être recouvert par une étiquette 2. Les volets sont alors fixés sur l'étiquette et maintiennent la barquette en position fermée avec les volets rabattus vers l'intérieur de la barquette. L'étiquette permet en outre de maintenir la barquette dans une position fermée.

Comme plus particulièrement visible sur la figure 11, le système de verrouillage 50 peut comporter deux organes de verrouillage femelle 51a, 51b se trouvant dans le prolongement de parois périphériques opposées 11, 12. Les organes de organes de verrouillage femelle 51a, 51b sont destinés à accueillir chacun deux organes de verrouillage mâle 52 se trouvant sur les extrémités 17a, 18a et 17b, 18b des volets 18, 17 respectivement. Les organes de verrouillage mâle 52 peuvent correspondre à des pattes de forme adaptée pour être insérés dans un orifice traversant adapté 51c des organes de verrouillage femelle 51a, 51b.

La figure 12 illustre une autre mode de réalisation comportant un unique organe de verrouillage femelle 51 de trouvant dans le prolongement de la paroi périphérique 140. L'organe de verrouillage femelle 51 est adapté pour accueillir deux organes de verrouillage mâle se trouvant sur deux extrémités 170a, 180a des volets rabattables 170, 180. On notera que la barquette 1" est de forme générale hexagonale et comporte une paroi de fond hexagonale et une pluralité de parois périphériques 110, 120, 130, 140, 150, 160 reliées à la paroi de fond. La barquette 1" comprend également deux volets rabattables 170, 180 reliés aux parois périphériques 150, 130 respectivement. Les volets 170, 180 comportent chacun une découpe respective 16a, 16b formant, lorsqu'ils sont rabattus, deux ouvertures sur une partie supérieure de la barquette. L'étiquette 2 est collée sur les volets rabattables 170, 180 de manière à recouvrir les deux découpes 16a, 16b pour permettre la visualisation des denrées tout en les maintenant dans la cavité formée par la paroi de fond et les parois périphériques. L'étiquette permet aussi de solidariser les volets entre eux et donc de fermer la barquette. L'étiquette peut être transparente ou ajourée et peut être encollée sur la totalité de sa surface ce qui facilite son positionnement par rapport aux volets et renforce l'adhésion des deux volets entre les deux découpes. De manière alternative, comme représenté sur la figure 12, l'étiquette peut comprendre deux parties non-adhésives 21a, 21b destinées à recouvrir au moins en partie les deux découpes, et une ou des parties adhésives, situées en périphérie des parties non-adhésives 21a, 22b par exemple une partie adhésive 23, entourant les deux parties non-adhésives 21a, 22b.

On notera que le système de verrouillage permet d'augmenter la rigidité et la stabilité de la surface formée par les volets rabattables fixés sur l'étiquette.

La figure 6 illustre un procédé de conditionnement de denrées périssables dans un emballage comportant un couvercle selon un mode de réalisation.

Le procédé de conditionnement comprend la fourniture d'une barquette 1 telle que celle décrite en référence à la figure 1 par exemple destinée à être remplie de denrées périssables telles que des fruits et légumes par exemple.

Par exemple, une pile de barquettes 1 est positionnée dans un magasin et une barquette est dépilée lors de l'étape E1 sur le tapis d'un servo-convoyeur intermittent 6 par exemple. De façon alternative, les barquettes peuvent aussi être formées une à une par pliage et éventuellement collage.

Ensuite, l'étape E2 de remplissage de la barquette avec les denrées périssables est mise en œuvre, par exemple à l'aide d'un distributeur de denrées automatique.

En outre, le procédé de conditionnement comprend une étape de fermeture de la barquette de manière à former un emballage comprenant une ouverture recouverte par une étiquette, transparente ou ajourée.

L'étape de fermeture de la barquette comprend une étape E4 de collage d'une étiquette 2 sur des bords de l'ouverture de sorte que l'étiquette 2 recouvre au moins en partie l'ouverture.

En particulier, l'étape de fermeture de la barquette comprend une étape E4 de collage d'une étiquette transparente ou ajourée 2 sur des bords de chaque ouverture de sorte que la partie non-adhésive 21 de l'étiquette transparente 2 recouvre chaque ouverture, lorsque l'étiquette comprend une partie non-adhésive 21 destinée à recouvrir au moins en partie chaque ouverture.

Optionnellement, le procédé de conditionnement peut comprendre également la fourniture d'un couvercle en carton ou en matériau biodégradable comportant au moins une découpe, la découpe étant destinée à être recouverte par l'étiquette transparente par exemple. Une pluralité de couvercles est par exemple positionnée dans un magasin en vue d'en faciliter la distribution.

L'étape de fermeture de la barquette comprend alors une étape E3 lors de laquelle un couvercle est déposé sur la barquette 1, par exemple le couvercle 2, de manière à fermer partiellement la barquette et donc la cavité formée par celle-ci. On rappelle ici que la cavité est partiellement fermée par le couvercle puisque celui-ci comprend au moins une découpe formant l'ouverture de la barquette une fois le couvercle en position sur celle-ci.

Puis, lors de l'étape E4, l'étiquette transparente ou ajourée 2 est collée au moins sur le couvercle de sorte que la partie non-adhésive 21 de l'étiquette recouvre au moins en partie l'ouverture et donc la découpe du couvercle de manière à maintenir les denrées dans la cavité tout en permettant leur visualisation.

On notera qu'ici l'étape E3 de dépôt du couvercle et l'étape E4 de collage de l'étiquette permettent de fermer la barquette de manière à former un emballage comprenant une ouverture recouverte par une étiquette transparente.

La figure 7 illustre un procédé de conditionnement de denrées périssables dans un emballage comprenant un ou des volets rabattables selon un autre mode de réalisation.

Le procédé de conditionnement comprend la fourniture d'une barquette 1 destinée à être remplie de denrées périssables et comprenant un ou des volets rabattables tel que décrit en référence aux figures 4 et 5 et aux figures 10 à 12 par exemple.

Par exemple, une pile de barquettes 1 comprenant un ou des volets rabattables est positionnée dans un magasin et une barquette est dépilée lors de l'étape E1 sur le tapis d'un servo-convoyeur intermittent 6 par exemple. De façon alternative, les barquettes peuvent aussi être formées une à une par pliage et éventuellement collage.

Dans le cas présent, une barquette 1 comprenant deux volets 17 et 18 décrits en référence à la figure 5 est représentée dans la figure 7.

Ensuite, l'étape E2 de remplissage de la barquette avec les denrées périssables est mise en œuvre, par exemple à l'aide d'un distributeur de denrées automatique.

Puis, lors de l'étape E35, le ou les volets rabattables sont rabattus, par exemple au moyen de guides longitudinaux exerçant une pression sur les volets de manière à les rabattre vers l'intérieur de la barquette. On notera que dans la figure 7, on a représenté schématiquement la barquette avec des volets dont la direction est orientée perpendiculairement à la direction de convoyage. En pratique, les volets sont orientés parallèlement à la direction de convoyage comme représenté sur la figure 9 avec la référence 220 représentant les guides longitudinaux configurés pour rabattre les volets.

On rappelle ici que la cavité est partiellement fermée puisqu'il subsiste, après rabattage du ou des volets, au moins une ouverture destinée à être recouverte par l'étiquette tel que décrit précédemment en référence aux figures 4 et 5, 10 à 12 par exemple.

Puis, lors de l'étape E4, une étiquette, transparente ou ajourée 2 est collée au moins sur le ou les volets de sorte que l'étiquette recouvre au moins en partie l'ouverture de manière à maintenir les denrées dans la cavité tout en permettant leur visualisation comme décrit en référence aux figures 4 et 5 par exemple. On notera que le collage de l'étiquette permet aussi de fixer les deux volets sur l'étiquette et donc de fermer la barquette.

Pour obtenir l'emballage de la figure 4, le procédé comprend en outre une étape de fixation du volet comportant le pliage du volet sur son extrémité et le collage de cette extrémité sur la paroi 13 par le biais d'une étiquette supplémentaire 5 comme illustré sur la figure 4. Cela peut être réalisé de manière automatique par le biais de moyens connus de l'homme du métier. Dans des variantes de réalisation, la fixation du volet rabattu sur la barquette peut se faire par d'autres moyens, par exemple par l'introduction d'une languette présente sur l'extrémité du volet dans une encoche prévue à cet effet sur la paroi périphérique 11. Par ailleurs, l'étiquette transparente peut être configurée pour recouvrir, en plus de l'ouverture, une partie d'une ou plusieurs parois périphériques, par exemple une partie de la paroi 11 de manière à fixer l'extrémité du volet sur celle-ci à la place de l'étiquette supplémentaire 5.

On notera qu'ici l'étape E35 de rabattage du ou des volets et l'étape E4 de collage de l'étiquette permettent de fermer la barquette de manière à former un emballage comprenant une ouverture recouverte par une étiquette, transparente ou ajourée.

En ce qui concerne les modes de réalisation décrits en référence aux figures 10 à 12, le procédé de conditionnement utilisé est semblable à celui décrit en référence à la figure 7 et comprend en outre une étape d'insertion des organes mâles dans les organes femelles de manière à verrouiller les deux volets rabattables dans une position fermée avant de coller l'étiquette. Cette étape est mise en œuvre pendant le rabattage des deux volets vers l'intérieur de la barquette. Cette étape peut être réalisée manuellement ou de manière automatisée comme décrit précédemment.

La figure 8 représente de manière plus détaillée l'étape de collage E4 de l'étiquette, transparente ou ajourée 2 selon un mode de réalisation. La figure 8 représente également, selon un mode de réalisation, une station de collage d'étiquettes 100 positionnée en regard de la bande du servo-convoyeur intermittent 6 sur lequel circule la barquette 1 lors des différentes étapes du procédé de conditionnement.

Comme cela est illustré sur la figure 8, une pluralité d'étiquettes transparentes ou ajourées adhésives 2 reposent sur un film de support 101 aussi appelé bandeau support par l'homme du métier. Les étiquettes transparentes sont formées sur un film en matériau biodégradable transparent. Les étiquettes ajourées sont formées sur un film de carton ou de papier et comportent une pluralité de perforations. Dans un mode de réalisation, les étiquettes comportent une partie non-adhésive 21 de forme prédéterminée destinée à recouvrir l'ouverture de l'emballage ainsi qu'une partie 22 également de forme prédéterminée recouverte d'adhésif destinée à coller l'étiquette transparente comme décrit précédemment en référence aux figures 1 à 5 et 10-11.

De manière connue de l'homme du métier, les étiquettes 2 sont recouvertes par un film de protection 102 destiné à recouvrir la partie adhésive 22 et la partie non adhésive 21 de chaque étiquette 2. On notera que le film de protection recouvre également la partie non-adhésive 21 de chaque étiquette 2.

On remarquera que les étiquettes adhésives représentées ici correspondent aux étiquettes représentées sur les figures 3, 4 et 5, 10-11 et comportent une partie centrale non adhésive 21 et une partie centrale adhésive 22b entourant la partie centrale non adhésive 21. On notera que, dans un autre mode de réalisation, les étiquettes peuvent ne pas comporter de partie non-adhésive de sorte que l'ouverture peut être recouverte par une portion d'étiquette adhésive.

Les étiquettes sont fournies sous la forme d'un rouleau 103 qui est déroulé par un système de traction et de mise sous tension comportant plusieurs cylindres 104, 105, 106 entrainés en rotation. Le cylindre 105 permet d'entrainer le déroulement du rouleau 103 vers le cylindre 104. Le film de protection 102 est enroulé sur le cylindre 106. Le film de support 101, après que le film de protection 102 ait été retiré, est enroulé sur le cylindre 104.

L'étiquette 2 peut être collée sur les bords de l'ouverture du couvercle 3,4 ou du/des volets rabattables 15' ; 17, 18 par un dispositif applicateur d'étiquettes adhésives configuré pour appliquer un moule pressoir 107 avec une pression uniforme sur l'étiquette 2 et plus particulièrement sur la partie adhésive périphérique 22b.

Dans l'exemple décrit ici, l'étiquette transparente 2 est collée sur les bords de l'ouverture formés par les volets rabattables 17, 18 décrits précédemment et correspond donc à l'étape S4 décrite en référence à la figure 7.

Le moule pressoir 107 est configuré pour appuyer sur une partie adhésive 22b de forme prédéterminée. On notera que le moule pressoir 107 présente une ouverture 107a correspondant substantiellement à l'ouverture destinée à être recouverte par l'étiquette, et donc à la partie centrale non-adhésive 21 lorsque celle-ci existe, de sorte que le moule pressoir 107 n'appuie pas sur la partie de l'étiquette destinée à recouvrir l'ouverture de l'emballage. On évite ainsi de déchirer l'étiquette 2 à l'endroit où celle-ci doit maintenir les denrées.

De manière optionnelle, le film biodégradable est imprimable à l'aide d'un dispositif d'impression 108 adapté, comprenant une tête d'impression à jet d'encre par exemple. La station de collage d'étiquette 100 peut comprendre alors un dispositif d'impression 108 configuré pour imprimer des codes-barres, des codes de traçabilité du produit et une date d'emballage par exemple. De cette manière, on réduit le nombre d'étapes pour procéder à l'emballage des denrées périssables. Le dispositif d'impression 108 peut également être configuré pour modifier l'aspect visuel de la barquette par exemple en imprimante différentes couleurs ou logos par exemple autour de l'ouverture. On notera que l'étape d'impression peut être mise en œuvre avant l'étape de collage E4 comme illustré ici mais pas uniquement.

En complément ou de manière alternative, lorsque l'étiquette transparente 2 comprend des rabats 22a destinés à être collés sur des parois périphériques de la barquette, comme illustré par exemple en référence à la figure 1 ou à la figure 2, l'étiquette transparente 2 peut être collée lors de l'étape E4 à l'aide d'un rouleau gomme applicateur commandé de manière adaptée. Le procédé de conditionnement dans un emballage de la figure 1 ne comprend alors pas d'étape E3 de pose de couvercle. Les rabats peuvent également être imprimés de manière à modifier l'aspect visuel de la barquette. On peut ainsi modifier aisément l'aspect visuel d'une barquette en modifiant l'impression de l'étiquette sans avoir à changer de barquette.

La figure 9 illustre en partie une chaine de conditionnement selon un mode de réalisation. La chaine de conditionnement 200 comprend un convoyeur de barquettes 210, un dispositif de remplissage de barquettes avec les denrées (non représenté), un dispositif 220 configuré pour rabattre le ou les volets rabattables et un système applicateur d'étiquettes. Le convoyeur de barquettes 210 peut correspondre à un servo-convoyeur intermittent comme décrit précédemment et le dispositif de rabattage de volets 220 peut comporter un ou plusieurs guides longitudinaux semblables à ceux représentés de manière schématique sur la figure 9 par exemple. Optionnellement, le dispositif 220 peut également être configuré pour insérer dans des organes de verrouillage mâle dans les organes de verrouillage femelle correspondants lorsque la barquette comporte un système de verrouillage tel que décrit en référence aux figures 10-11 et 12 par exemple.

Dans le mode de réalisation décrit ici, le système applicateur d'étiquettes comprend un premier dispositif applicateur d'étiquettes 240 connu de l'homme du métier et configuré pour appliquer, à l'aide d'un rouleau gomme applicateur 241 une partie de l'étiquette 2 sur les bords de l'ouverture, la partie non adhésive 21 de l'étiquette recouvrant au moins en partie l'ouverture.

Le système applicateur d'étiquettes comprend un deuxième dispositif applicateur d'étiquettes 260 comprenant un moule pressoir 261. Le moule pressoir 261 est configuré pour appuyer sur les rabats 22a de l'étiquette transparente 2 sans appliquer de contraintes sur la partie non adhésive 21 de l'étiquette 2 ou plutôt sur la partie destinée à recouvrir au moins en partie l'ouverture.

A cet effet, le moule pressoir 261 comprend au moins un bras 261a rabattable configuré pour appuyer sur au moins un rabat 22a de l'étiquette 2 de manière à le faire adhérer à au moins une paroi périphérique de la barquette.

L'exemple illustré ici représente de manière schématique le rabattage des volets rabattables 17, 18 d'une barquette selon la figure 5 et l'application de l'étiquette 2 de manière à faire adhérer les deux rabats 22a à deux parois périphériques de la barquette pour obtenir l'emballage décrit en référence à la figure 5.

Avantageusement, le moule pressoir 261 comprend aussi une partie 261b fixe permettant de maintenir au moins une partie de l'étiquette contre les bords de l'ouverture pendant que le ou les bras 261a se rabattent pour faire adhérer le ou les rabats contre au moins une paroi périphérique de la barquette. La partie 261b peut par exemple correspondre au moule pressoir 107 décrit précédemment et comprendre une ouverture 107a ou, au contraire, ne pas comporter d'ouverture lorsqu'une partie de l'étiquette 2 a déjà été collée sur les bords de l'ouverture par le biais du rouleau gomme applicateur 241.

On notera que l'on peut remplacer le moule pressoir 261 comprenant au moins un bras rabattable par au moins un rouleau, par exemple un rouleaux gomme applicateur, configuré pour rabattre chaque rabat de l'étiquette vers une paroi périphérique de la barquette.

La présente divulgation ne se limite pas aux exemples décrits ci-avant, seulement à titre d'exemple, mais elle englobe toutes les variantes que pourra envisager l'homme de l'art dans le cadre de la protection recherchée.

Ainsi, il est possible de remplacer l'étiquette transparente par une étiquette en papier ou en carton ajourée, i.e. comportant une pluralité de performations permettant la visualisation partielle du contenu de la barquette à travers l'ouverture tout en empêchant les denrées contenues dans la barquette de sortir par les perforations et vice versa. L'étiquette transparente et l'étiquette ajourée produisent le même effet, à savoir permettre une visualisation des denrées contenues dans la barquette à l'ouverture, que ce soit de manière partielle ou non.

Il est également possible d'utiliser, dans chacun des exemples décrits ci-dessus, une étiquette comportant une partie centrale non-adhésive et une partie périphérique adhésive ou une étiquette également adhésive sur la partie centrale recouvrant au moins partiellement l'ouverture.

## Revendications

1. Emballage adapté pour contenir des denrées périssables tout en permettant leur visualisation comportant :
- une barquette (1 ; 1' ; 1") en carton ou en matériau biodégradable adaptée pour contenir des denrées périssables, ladite barquette comportant une paroi de fond (10) et une pluralité de parois périphériques (11, 12, 13, 14, 15 ; 110, 120, 130, 140, 150, 160), la barquette (1 ; 1' ; 1") comprend en outre deux volets rabattables (17, 18 ; 170, 180) reliés chacun à une paroi périphérique (13, 14 ; 130, 150), les volets rabattables (17, 18 ; 170, 180) étant conformés pour former, lorsqu'ils sont rabattus, une ouverture (O) sur une partie supérieure de la barquette, la barquette (1 ;1' ; 1") formant ainsi une cavité destinée à contenir les denrées périssables et destinée à être fermée tout en permettant la visualisation des denrées périssables à travers l'ouverture (O), et
- une étiquette (2) collée sur des bords de l'ouverture formés par les deux volets et recouvrant au moins en partie l'ouverture de manière à maintenir les denrées dans la cavité tout en permettant leur visualisation, l'étiquette (2) étant formée en matériau biodégradable.

2. Emballage selon la revendication précédente, dans lequel l'étiquette (2) comporte une partie non-adhésive recouvrant au moins en partie l'ouverture de manière à maintenir les denrées dans la cavité tout en permettant leur visualisation.

3. Emballage selon l'une des revendications précédentes, dans lequel l'étiquette (2) est formée sur un film transparent.

4. Emballage selon l'une des revendications 1 ou 2, dans lequel l'étiquette (2) est formée sur du papier ou du carton et comporte des perforations sur une partie recouvrant au moins en partie l'ouverture.

5. Emballage selon l'une des revendication 1 à 4, dans lequel :
- la barquette (1 ; 1') comprend deux paires de parois périphériques opposées l'une à l'autre (11, 12, 13, 14),
- la barquette (1 ; 1') comprend, sur l'une des paires de parois périphériques (13, 14), les deux volets rabattables (17, 18) reliés chacun à une paroi périphérique (13, 14), les volets rabattables (17, 18) étant conformés pour former, lorsqu'ils sont rabattus, un espace libre (19) entre les deux volets (17, 18), les deux volets (17, 18) formant des bords de l'ouverture sur laquelle est collée l'étiquette (2).

6. Emballage selon l'une des revendications 1 à 5, dans lequel la barquette (1' ; 1") comprend, en outre, pour chaque volet rabattable (17, 18 ; 170, 180) :
- un système de verrouillage (50) d'une extrémité (17a, 17b, 18a, 18b) de chaque volet rabattable (17, 18 ; 170, 180) sur une paroi périphérique correspondante (11, 12 ; 110) lorsque les volets sont rabattus vers l'intérieur de la barquette, le système de verrouillage (50) comprenant :
* un organe de verrouillage mâle (52), et
* un organe de verrouillage femelle (51a, 51b ; 51),
chaque organe de verrouillage mâle (52) étant configuré pour être inséré dans un organe de verrouillage femelle respectif (51a, 51b ; 51) de manière à verrouiller chaque volet (17, 18 ; 170, 180) dans une position de fermeture de la barquette (1' ; 1") lorsque les volets sont rabattus vers l'intérieur de la barquette,
l'un de l'organe de verrouillage mâle (52) et de l'organe de verrouillage femelle (51a, 51b ; 51) se trouvant sur une extrémité (17a, 17b, 18a, 18b) du volet rabattable et l'autre de l'organe de verrouillage mâle (52) et de l'organe de verrouillage femelle (51a, 51b ; 51) se trouvant sur une paroi périphérique (11, 12; 110) de la barquette, ladite paroi périphérique (11, 12; 110) étant en regard de ladite extrémité (17a, 17b, 18a, 18b) lorsque ledit volet (17, 18) est rabattu vers l'intérieur de la barquette.

7. Procédé de conditionnement de denrées périssables dans un emballage, comportant:
- une fourniture d'une barquette (1 ; 1', 1") en carton ou en matériau biodégradable adaptée pour contenir des denrées périssables et comportant une paroi de fond (10) et au moins une paroi périphérique (11, 12, 13, 14, 15 ; 110, 120, 130, 140, 150, 160),
- un remplissage (E2) de la barquette (1) avec les denrées périssables,
- une fermeture de la barquette de manière à former un emballage comprenant une ouverture recouverte par une étiquette, l'étiquette étant configurée pour permettre une visualisation des denrées contenues dans la barquette à travers l'ouverture, la fermeture de la barquette comprenant :
* un collage (E4) de l'étiquette (2) sur des bords de l'ouverture de sorte que l'étiquette recouvre au moins en partie l'ouverture, l'étiquette (2) étant formée en matériau biodégradable.

8. Procédé de conditionnement selon la revendication 6, dans lequel le procédé comprend en outre :
- une étape de fourniture d'un couvercle (3 ; 4) en carton ou en matériau biodégradable comportant au moins une découpe formant l'ouverture de la barquette une fois le couvercle en position sur celle-ci (31 ; 42), chaque découpe étant destinée à être recouverte par l'étiquette (2),
- la fermeture de la barquette comprend une étape de :
* dépôt du couvercle (E3) sur la barquette de manière à venir fermer partiellement la barquette, et
* collage (E4) de l'étiquette sur des bords de la découpe (31 ; 42) du couvercle, le collage de l'étiquette (2) étant mis en œuvre après le dépôt (E3) du couvercle (3 ; 4).

9. Procédé de conditionnement selon la revendication 6, dans lequel :
- la barquette fournie comporte deux paires de parois périphériques opposées l'une à l'autre et un volet rabattable (15') relié à l'une des parois périphériques des deux paires (14), ledit volet (15') comportant au moins une découpe (16) formant l'ouverture de la barquette une fois le volet (15') rabattu sur celle-ci, et
- la fermeture de la barquette comprend :
* un rabattage (E35) du volet rabattable (15') vers l'intérieur de la barquette, et
* le collage (E4) de l'étiquette (2) sur des bords de l'ouverture de l'emballage comprend l'application de l'étiquette sur des bords de la découpe de manière à recouvrir la découpe (16), et
* une fixation du volet sur la barquette, préférentiellement par le bais de l'étiquette.

10. Procédé de conditionnement selon la revendication 6 dans un emballage selon la revendication 1, dans lequel :
- la fermeture de la barquette (1) comprend :
* un rabattage (E35) des deux volets rabattables (17, 18) vers l'intérieur de la barquette (1) et
* le collage (E4) de l'étiquette (2) sur les deux volets (17, 18) rabattus de manière à recouvrir l'ouverture.

11. Procédé de conditionnement selon la revendication 6 dans un emballage selon la revendication 5, dans lequel :
- la fermeture de la barquette (1) comprend :
* un rabattage (E35) des deux volets rabattables (17, 18) vers l'intérieur de la barquette (1) de manière à créer un espace libre (19) entre les deux volets (17, 18), et
* le collage (E4) de l'étiquette (2) sur les deux volets (17, 18) rabattus de manière à recouvrir l'espace libre entre les deux volets (17, 18).

12. Procédé de conditionnement selon la revendication 6 dans un emballage selon la revendication 6, dans lequel :
- la fermeture de la barquette comprend en outre :
* un rabattage des volets rabattables (17, 18, 19, 20) vers l'intérieur de la barquette (1),
* une insertion de chaque organe de verrouillage mâle dans l'organe de verrouillage femelle respectif de manière à verrouiller les deux volets rabattables dans une position de fermeture de la barquette, et
* le collage de l'étiquette sur les deux volets verrouillés de manière à recouvrir l'ouverture.

13. Dispositif applicateur d'étiquettes adhésives destinées à recouvrir une ouverture d'un emballage lors de la mise en œuvre d'un procédé de conditionnement selon l'une des revendications 6 à 12, dans lequel
- ledit dispositif applicateur d'étiquettes comprend un moule pressoir (107 ; 261) configuré pour appuyer sur une partie adhésive (22b ; 22a) d'une étiquette transparente (2) de forme déterminée, et
- ledit dispositif étant configuré pour appliquer une pression prédéfinie sur le dit moule (107 ; 261) de manière à faire adhérer la partie adhésive de forme déterminée (22b ; 22a) de l'étiquette (2) sur des bords de l'ouverture.

14. Dispositif applicateur d'étiquettes adhésives selon la revendication 13, dans lequel l'étiquette comporte une partie non adhésive (21) destinée à recouvrir au moins en partie l'ouverture.
